# EUROPÄISCHE PATENTSCHRIFT

(11) **EP 2 190 736 B1**
(45) Veröffentlichungstag und Bekanntmachung des Hinweises auf die Patenterteilung: **16.04.2014**
(21) Anmeldenummer: 09780812.5
(22) Anmeldetag: 20.07.2009
(51) Int. Cl.: G10K 11/172, F16L 59/135, F16L 55/035, F16L 59/02, B64C 1/40

(54) **ISOLATIONSAUFBAU ZUM THERMISCHEN UND AKUSTISCHEN ISOLIEREN EINES LUFTFAHRZEUGS**
INSULATION DESIGN FOR THERMAL AND ACOUSTIC INSULATION OF AN AIRCRAFT
STRUCTURE D'ISOLATION POUR L'ISOLATION THERMIQUE ET ACOUSTIQUE D'UN AERONEF

(30) Priorität: 08.08.2008 DE 102008037143; 08.08.2008 US 188328 P
(43) Veröffentlichungstag der Anmeldung: 02.06.2010
(73) Patentinhaber: Airbus Operations GmbH, 21129 Hamburg (DE)
(72) Erfinder: MÜLLER, Rainer, 21224 Rosengarten (DE); GRENZING, Benjamin, 21075 Hamburg (DE); THOMAS, Christian, 22769 Hamburg (DE)
(74) Vertreter: Maiwald Patentanwalts GmbH
(86) Internationale Anmeldenummer: PCT/EP2009/059278
(87) Internationale Veröffentlichungsnummer: WO 2010/015503

(56) Entgegenhaltungen:
- EP-A- 0 378 979
- EP-A- 1 535 834
- EP-A- 1 612 768
- US-A- 4 137 992
- US-A1- 2008 128 200
- DIPL.-ING. UNIV. ANDREAS ZEITLER: "Untersuchung der Hubschrauberinnenakustik mittels der Methode der statistischen Energieanalyse" PUBLIKATION DES LEHRSTUHLS FÜR LEICHTBAU DER TECHNISCHEN UNIVERSITÄT, [Online] 6. November 2006 (2006-11-06), XP002548320 München Gefunden im Internet: URL:http://deposit.ddb.de/cgi-bin/dokserv? idn=985152559&dok_var=d1&dok_ext=pdf&filen ame=985152559.pdf> [gefunden am 2009-10-01]

## Beschreibung

### VERWANDTE ANMELDUNGEN

Die vorliegende Anmeldung beansprucht die Priorität der US Provisional Patentanmeldung Nr. 61/188 328, eingereicht am 08. August 2008 und der deutschen Patentanmeldung Nr. 10 2008 037 143.2, eingereicht am 08. August 2008.

### TECHNISCHES GEBIET

Die Erfindung betrifft einen Isolationsaufbau zum thermischen und akustischen Isolieren eines Luftfahrzeugs.

### HINTERGRUND DER ERFINDUNG

Moderne Luftfahrzeuge werden zum Gewährleisten eines thermischen Komforts und zum Begrenzen des Geräuschniveaus in der Kabine thermisch und akustisch isoliert. Die in diesem Zusammenhang im Wesentlichen zu reduzierenden Geräusche entstehen üblicherweise außerhalb des Luftfahrzeugs, beispielsweise durch die turbulente Strömungsgrenzschicht am Rumpf und durch den Abgasstrahl der Triebwerke. Neben den steigenden Komfortansprüchen von Passagieren stellen auch höhere Reisefluggeschwindigkeiten sowie die akustisch nachteiligen Eigenschaften von Luftfahrzeugrümpfen aus Faserverbundwerkstoffen im direkten Vergleich mit monolithischen metallischen Werkstoffen eine zunehmende Herausforderung für die akustische Isolation dar. Insbesondere die Anforderungen an die akustische Wirksamkeit der Isolation hinsichtlich Schalldämmung und Schallabsorption steigt aus diesem Grunde ständig und können durch herkömmliche Isolationsaufbauten nicht bewältigt werden.

Die thermische Isolation eines Flugzeugrumpfes - die sogenannte Primärisolierung-wird üblicherweise aus mattenförmigen Isolationspaketen aufgebaut, die aus Glaswolle mit relativ niedriger Dichte (beispielsweise kleiner als 10 kg/m³) in dünner Umhüllungsfolie bestehen. Dabei werden sowohl Matten für einen Hautfeldbereich oberhalb der für die Längsversteifung eines Rumpfs verwendeten Stringer zwischen den Spanten als auch Matten zur Umwicklung der Spannten eingesetzt.

Diese herkömmliche thermische Isolation besitzt zusätzlich auch die Funktion der akustischen Isolation und trägt somit zur Gewährleistung des Kabinenkomforts hinsichtlich Temperatur und Geräusch bei. Die akustische Wirksamkeit der üblicherweise verwendeten Glaswollpakete ist im hochfrequenten Bereich, der wesentlich den Bereich der Sprachverständlichkeit umfasst, relativ hoch, wohingegen bei Frequenzen unterhalb von 500 Hz nur eine unwesentliche Schalldämmung erfolgt. Werden höhere Ansprüche an den Geräuschkomfort im Innenraum gestellt, wie es beispielsweise bei Geschäfts- oder Privatflugzeugen der Fall ist, werden unter anderem auch genadelte Filzmaterialien eingesetzt, die teilweise auch vom Rumpf abgewandt, beispielsweise oberhalb von Spantköpfen befestigt werden.

Aus der Druckschrift WO 2005/095206 sowie aus der Druckschrift WO 2006/114332 ist bekannt, dass aus verschiedenen Materialien aufgebaute, mehrlagige Isolationspakete zur Steigerung des akustischen Komforts innerhalb der Kabine eines Flugzeugs verwendet werden können. Des Weiteren ist dem Fachmann bekannt, dass die Erhöhung des Schalldämmmaßes einer Struktur insbesondere im tieffrequenten Bereich (beispielsweise kleiner als 500 Hz) durch die Erhöhung der Masse der Flugzeugaußenhaut oder durch den Einsatz einer zusätzlicher Schicht mit einer relativ hohen spezifischen Dichte im Isolationsaufbau erreicht werden kann. Dabei kann die Erhöhung des Flächengewichts des Flugzeugrumpfes beispielsweise durch die direkte Applikation sogenannter Dämpfungsbeläge oder Schwerschichten auf den Hautfeldern erfolgen.

Weiterhin ist auch das vorteilhafte akustische Verhalten von Doppelwandstrukturen gegenüber Einfachwänden bekannt. Es ergeben sich bei insgesamt gleichem eingesetzten Gewicht der Maßnahme zur Schalldurchgangsreduktion bei Verteilung auf zwei Wandelemente höhere Schalldämmmaße als bei der Konzentration des identischen Gewichts auf eine Einfachwand. Insbesondere im Flugzeugbau ist das für akustische Maßnahmen zur Verfügung stehende Gewicht begrenzt, so dass der Fachmann den Aufbau von Doppel- oder Mehrfachwandstrukturen zum Bereitstellen einer bestmöglichen Geräuschdämmung bevorzugen würde.

In der bereits erwähnten Druckschrift WO 2006/114332 wird für den Einsatz in Geschäftsflugzeugen ein Isolationsaufbau gezeigt, bei dem durch die Verwendung eines kombinierten Pakets aus porösem Absorber und Schwerfolie im Zusammenwirken mit einer Flugzeugaußenhaut eine Doppelwandstruktur aus Außenhaut und Schwerfolie erzeugt wird. Diese weist jedoch verschiedene Nachteile auf. Die durch den Aufbau erzeugte Doppelwand besitzt bei der sogenannten Doppelwandresonanzfrequenz, deren Höhe sich im Wesentlichen durch die Masse der Schwerfolie und dem Abstand der Schwerfolie und der Flugzeugaußenhaut ergibt, einen Einbruch im Schalldämmmaß und zeigt erst oberhalb dieser Doppelwandresonanzfrequenz das bekannte vorteilhafte akustische Verhalten. Weiterhin ergibt sich insbesondere im Seitenwandbereich von Flugzeugen mit Rumpf, Schwerfolie und Innenverkleidungspaneel ein Mehrfachwandaufbau, der zusätzliche Resonanzeffekte mit Schalldammmaßeinbrüchen aufweist. Diese Doppel- und Mehrfachwandresonanzen entstehen dadurch, dass die zwischen den Wänden in den Bereichen von Versteifungsbauteilen eingeschlossene Luft als Feder wirkt und sich somit ein schwingungsfähiges Feder-Masse-System bildet.

Ebenfalls deckt die verwendete Schwerfolie die auf dem Flugzeugrumpf angeordnete Primärisolierung akustisch ab. Dadurch kann jedoch die Schallenergie zwischen der Schwerfolie und der Kabinenverkleidung nicht mehr absorbiert werden, so dass sich die effektive kabinenseitige Absorberschichtdicke reduziert.

Weiterhin wirkt eine geschlossene Schwerfolie innerhalb eines Aufbaus zur thermischen Isolation als Dampfsperre, so dass sich durch den Einsatz der Schwerfolie Kondenswasser bildet, welches vom angrenzenden porösen Isolationsmaterial aufgesogen wird. Eine Trocknung dieses Materials wird aufgrund der vollständigen Abdeckung des Isolationsmaterials erschwert bzw. ist gänzlich unmöglich, so dass die Materialien in der thermischen und akustischen Isolation im Laufe des Flugzeuglebens stetig an Gewicht zunehmen.

Des weiteren ist das Dokument EP 1 535 834 A2 bekannt, welches den nächstliegenden Stand der Technik darstellt und den Oberbegriff des Anspruchs 1 offenbart.

### ZUSAMMENFASSUNG DER ERFINDUNG

Die Aufgabe der Erfindung ist, einen Isolationsaufbau zum thermischen und akustischen Isolieren eines Luftfahrzeugs vorzuschlagen, der ein geringes Gewicht aufweist, besonders gut zum Dämmen von tieffrequenten Geräuschen geeignet ist, ohne jedoch die thermische Isolierung zu beeinträchtigen und Kondensation hervorzurufen.

Die Aufgabe wird gelöst durch einen Isolationsaufbau zum thermischen und akustischen Isolieren eines Luftfahrzeugs, aufweisend mindestens eine Schwerschicht und eine bevorzugt kabinenseitig der Schwerschicht angeordnete Absorptionsschicht, wobei die Schwerschicht zumindest bereichsweise perforiert ist und deren Lochflächenanteil derart angepasst ist, dass die Schwerschicht für Frequenzen unterhalb einer Doppelwandfrequenz des Isolationsaufbaus im Wesentlichen schalltransparent ist.

Durch die Perforation der Schwerschicht wird der vorangehend beschriebene Schalldämmmaßeinbruch bei akustisch dichter Schwerschicht vermieden. Der erfindungsgemäße Isolationsaufbau weist jedoch das im Sinne des eingebrachten Gewichts der Schwerschicht das vorteilhafte akustische Verhalten der Doppelwand oberhalb der Doppelwandresonanzfrequenz auf. Somit kann durch die Perforation kein abgeschlossenes Luftpolster mehr entstehen und das Ausbilden eines schwingungsfähigen Masse-Feder-Systems wird unterdrückt. In Abhängigkeit von dem einzustellenden Perforationsgrad bzw. Lochflächenanteil ist die Schwerschicht für höhere Frequenzen, die oberhalb der Doppelwandfrequenz des erfindungsgemäßen Isolationsaufbaus liegen, dennoch weiterhin als akustisch dicht anzusehen. Durch die eingebrachte Perforation in der Schwerschicht kann zusätzlich der Wasserdampftransport aufrechterhalten werden, so dass die Isolierung des Luftfahrzeugs beim Bodenaufenthalt abtrocknen kann. Die erfindungsgemäße Perforation vermeidet demnach, dass die Schwerschicht als Dampfsperre wirkt.

Bei einem besonders vorteilhaften erfindungsgemäßen Isolationsaufbau ist die Absorptionsschicht aus einem porösen Material gebildet. Dieses Material könnte beispielsweise Glaswolle sein. Hierdurch wird eine besonders wirkungsvolle Schallabsorption erreicht.

Bei einem besonders vorteilhaften erfindungsgemäßen Isolationsaufbau weist die Absorptionsschicht eine Dichte zwischen 3,5 kg/m³ und 25 kg/m³ auf. Bei der Konstruktion von Luftfahrzeugen wird generell auf möglichst geringe Komponentengewichte geachtet, der angegebene Dichtebereich erfüllt einen Kompromiss zwischen möglichst hoher Schallabsorption und einem geringstmöglichen Gewicht.

Die Dicke der Absorptionsschicht im Bereich von 5 mm bis 55 mm ist ferner besonders günstig, da diese vergleichweise geringe Schichtdicke in Kombination mit der perforierten Schwerschicht ausreicht, um tiefe Frequenzen effektiv zu absorbieren und gleichzeitig das zusätzliche Gewicht und die Gesamtdicke durch den erfindungsgemäßen Isolationsaufbau in akzeptablen Grenzen zu halten.

Ein Flächengewicht der Schwerschicht zwischen 0,5 kg/m² und 4 kg/m² ist bei dem erfindungsgemäßen Isolationsaufbau zu bevorzugen, denn durch den Einsatz zusätzlicher Masse kann das Schalldämmmaß erhöht werden und damit die Effektivität des erfindungsgemäßen Aufbaus gesteigert werden. In dem genannten Bereich des Flächengewichts kann eine ausreichende Schalldämmung tiefer Frequenzen beispielsweise durch die dafür günstig eingestellte Doppelwandfrequenz erreicht werden.

Ferner ist eine günstige Weiterbildung des erfindungsgemäßen Isolationsaufbaus dazu eingerichtet, eine erste Komponente einer Befestigungsanordnung aufzunehmen, die mit einer luftfahrzeugstrukturfest angeordneten zweiten Komponente der Befestigungsanordnung zum Eingehen einer Verbindung korrespondiert. Dies ist sinnvoll, denn mehrere erste Komponenten der Befestigungsanordnung können bereits bei der Herstellung des Isolationsaufbaus integriert werden und mehrere zweite Komponenten können bereits bei der Flugzeugstrukturmontage an vorbestimmten Stellen positioniert werden. Dadurch können bei der Endmontage des Luftfahrzeugs ein oder mehrere Arbeitsschritte beim Befestigen des erfindungsgemäßen Isolationsaufbaus entfallen. Durch die korrespondierenden Lagen der ersten und der zweiten Komponenten der Befestigungsanordnung müssen die an dem erfindungsgemäßen Isolationsaufbau angeordneten ersten Komponenten lediglich in die zweiten Komponenten eingebracht werden. Dies geschieht bevorzugt durch leicht herzustellende Schnapp- oder Rastverbindungen.

Eine vorteilhafte Weiterbildung des erfindungsgemäßen Isolationsaufbaus sieht vor, dass die zweite Komponente der Befestigungsanordnung bzw. eine Mehrzahl hiervon rumpfinnenseitig an der Außenhaut des Flugzeugs angeordnet ist. Dadurch wird eine leichte Befestigung des erfindungsgemäßen Isolationsaufbaus direkt auf der Außenhaut des Luftfahrzeugs ermöglicht, wodurch der Isolationsaufbau keine - übermäßige Einschränkung des Bauraums für die Kabine verursacht.

Das Anordnen von zweiten Komponenten der Befestigungsanordnung rumpfinnenseitig an oder auf einem oder mehreren Strukturversteifungsbauteilen ist hingegen deswegen vorteilhaft, da durch den größeren Abstand zwischen Rumpf und Schwerschicht die Doppelwandfrequenz weiter sinkt und der erfindungsgemäße Isolationsaufbau dadurch in seiner Effektivität gesteigert wird. Als Versteigungsbauteil werden sämtliche Bauteile gemeint, die zur Versteifung des Flugzeugrumpfs Verwendung finden, wie etwa Spante zur Querversteifung und Stringer zur Längsversteifung.

In einer vorteilhaften Weiterbildung des erfindungsgemäßen Isolationsaufbaus werden die zweiten Komponenten der Befestigungsanordnung luftfahrzeugstrukturfest geklebt oder einlaminiert. Bei Flugzeugrümpfen, die aus metallischen Werkstoffen hergestellt werden, bietet es sich an, zweite Komponenten der Befestigungsanordnung zu kleben. Dadurch kann das Erstellen von Bohrlöchern, das Reinigen, Abdichten und dergleichen für Niet- oder Schraubverbindungen entfallen. Andererseits ist es besonders günstig, während des Herstellvorgangs des Rumpfs bereits die zweiten Komponenten der Befestigungsanordnung einzulaminieren, wenn der Flugzeugrumpf aus einem Faserverbundwerkstoff, etwa CFK, hergestellt wird. Dadurch entfällt zwar eine gewisse Flexibilität in der nachträglichen Anordnung von zweiten Komponenten, jedoch kann ein hohes Maß an Vorfertigung des Flugzeugrumpfs erreicht werden. Das Einlaminieren der zweiten Komponenten resultiert ferner in einer besonders festen Verbindung.

Weiterhin bevorzugt ist, wenn die erste Komponente und die zweite Komponente dazu eingerichtet sind, eine form- oder kraftschlüssige Verbindung einzugehen. Derartige Verbindungen können dabei so ausgelegt werden, dass sie für den gesamten Einsatz der zu befestigenden Komponenten ausreichend sind. Beide Verbindungstechniken sind relativ leicht herzustellen und in den ersten und zweiten Komponenten zu integrieren, weiterhin ist auch das Aktivieren der Verbindung häufig werkzeuglos und damit sehr einfach zu vollziehen. Als formschlüssige Verbindung könnte beispielsweise eine Schnapp- oder Rastverbindung in Frage kommen. Kraftschlüssige Verbindungen umfassen beispielsweise Klemmverbindungen, bei denen allerdings der Einsatz von Werkzeug zum Lösen notwendig sein könnte.

Weiterhin ist es günstig, wenn die erste und/oder die zweite Komponente dazu eingerichtet ist, auch Gegenstände, Geräte, Leitungen oder dergleichen zu haltern. Dadurch erfüllt die Befestigungsanordnung für den erfindungsgemäßen Isolationsaufbau nicht nur die Aufgabe des Haltens des erfindungsgemäßen Isolationsaufbaus, sondern die erste Komponente kann auch weitere Gegenstände haltern. Die erste Komponente der Befestigungsanordnung zeigt bevorzugt in den Rumpfinnenbereich, so dass sich beispielsweise elektrische Leitungen, Sauerstoff- oder Wasserleitungen, Kabelkanäle und dergleichen direkt anschließend an den erfindungsgemäßen Isolationsaufbau relativ leicht haltern lassen.

Die Aufgabe wird ferner durch ein Verfahren zum Herstellen eines Isolationsaufbaus aufweisend mindestens eine Schwerschicht und eine Absorptionsschicht gelöst, wobei in dem erfindungsgemäßen Verfahren die folgenden Schritte durchgeführt werden: einer Absorptionsschicht und einer Schwerschicht, Perforieren der Schwerschicht, wobei der Lochflächenanteil der Schwerschicht derart angepasst wird, dass die Schwerschicht für Frequenzen unterhalb einer Doppelwandfrequenz des Isolationsaufbaus im Wesentlichen schalltransparent ist, Einbringen mindestens einer ersten Komponente der Befestigungsanordnung in mindestens eines der Elemente Absorptionsschicht und Schwerschicht, Zusammenführen der ersten Komponenten der Befestigungsanordnung mit zweiten Strukturen fest angeordneten Komponenten der Befestigungsanordnungen. Schließlich wird die Aufgabe auch durch eine Verwendung eines erfindungsgemäßen Isolationsaufbaus und ein Flugzeug mit mindestens einem erfindungsgemäßen Isolationsaufbau gelöst.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren, dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehung. In den Figuren stehen weiterhin gleiche Bezugszeichen für gleiche oder ähnliche Objekte. Es zeigen:
- Figur 1:: schematische Ansicht eines erfindungsgemäßen Isolationsaufbaus;
- Figur 2:: schematische Ansicht eines erfindungsgemäßen Isolationsaufbaus mit Befestigungsanordnung auf einem Spantkopf;
- Figur 3:: eine weitere schematische Ansicht des erfindungsgemäßen Isolationsaufbaus mit Befestigungsanordnung;
- Figuren 4a-4e:: schematische Ansicht einer zweiten Befestigungskomponente und vier verschiedenen ersten Komponenten der Befestigungsanordnung;
- Figuren 5a-5c:: verschiedene zusätzlich an der Befestigungsanordnung angeordnete Komponenten und
- Figur 6:: Übersicht über das erfindungsgemäße Verfahren zum Herstellen eines erfindungsgemäßen Isolationsaufbaus.

### DETAILLIERTE BESCHREIBUNG EXEMPLARISCHER AUSFÜHRUNGSBEISPIELE

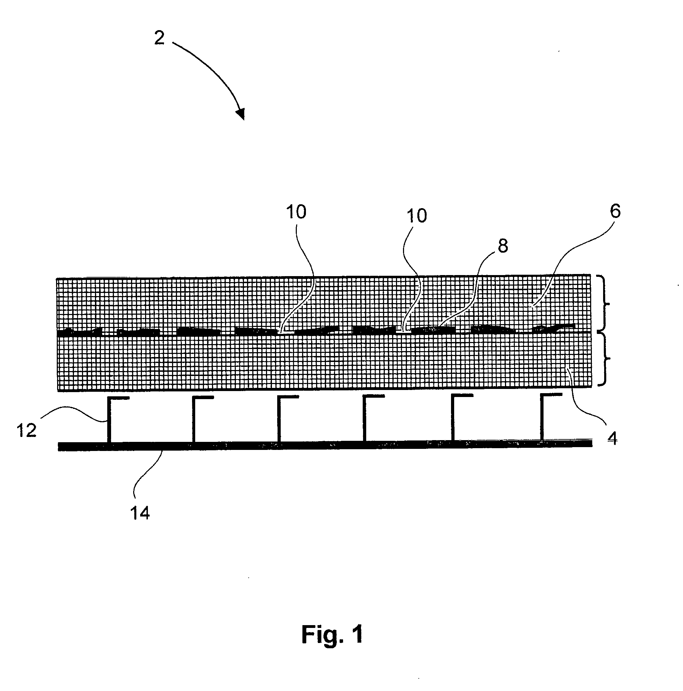

In Figur 1 wird ein erfindungsgemäßer Isolationsaufbau 2 gezeigt, der eine Isolationsschicht 4, eine Absorptionsschicht 6 und eine dazwischen angeordnete Schwerschicht 8 aufweist. Die Schwerschicht 8 ist perforiert und weist demnach eine Reihe von Löchern 10 auf, deren Anteil an der gesamten Fläche der Schwerschicht, d. h. der Lochflächenanteil, so ausgelegt ist, dass die Schwerschicht 8 für Frequenzen unterhalb einer Doppelwandfrequenz des erfindungsgemäßen Isolationsaufbaus 2 im Wesentlichen schalltransparent ist. Schalltransparent bedeutet dabei, dass die Schwerschicht für Schallwellen durchlässig ist. Bei Schalltransparenz setzt sich die Gesamtdicke des Schallabsorbers - gebildet aus der Absorptionsschicht 6 und der Isolationsschicht 4 - daher aus der Dicke dieser beiden Schichten 4 und 6 zusammen. Wäre die Schwerschicht 8 nicht perforiert, würde sich die Gesamtdicke des Schallabsorbers auf die Dicke der Absorptionsschicht 6 reduzieren. Neben einer Verbesserung der Schalldämmung wird durch die frequenzabhängig schalltransparente Schwerschicht 8 das Absorptionsvermögen des erfindungsgemäßen Isolationsaufbaus 2 zu tiefen Frequenzen erweitert. Es ist hierbei anzumerken, dass für die Gesamtdicke des Schallabsorbers wirksame Dicke der Isolationsschicht 4 die Dicke des darin befindlichen porösen Materials ist.

Wie in Figur 1 gezeigt, kann der erfindungsgemäße Isolationsaufbau aufliegend auf Stringern 12 angeordnet werden, die zur Längsversteifung des Flugzeugrumpfes dienen. Die Stringer 12 sind an der Außenhaut 14 des Flugzeugs angeordnet, wobei der Abstand zwischen der Schwerschicht 8 und der Außenhaut 14 zusammen mit der Masse der Schwerschicht 8 die ausschlaggebenden Parameter zur Ermittlung der Doppelwandfrequenz sind. Je größer der Abstand zwischen der Schwerschicht 8 und der Außenhaut 14 ist, desto niedriger ist die Doppelwandfrequenz.

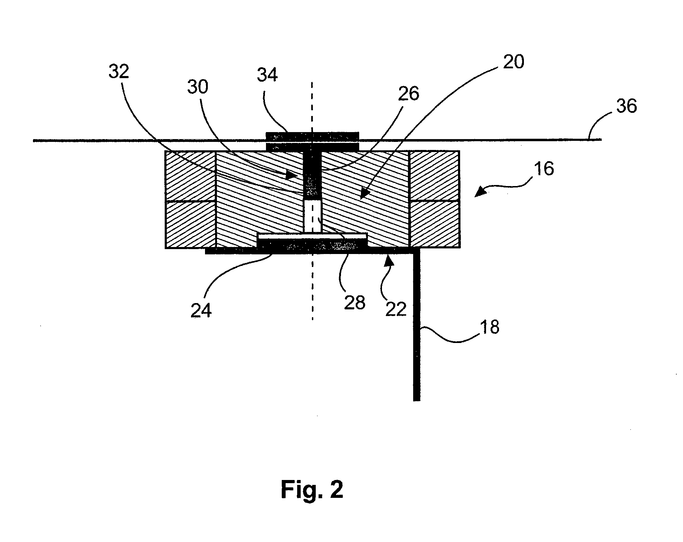

Wie in Figur 2 gezeigt, kann der erfindungsgemäße Isolationsaufbau 16 auch auf einen Spant 18 mittels einer Befestigungsanordnung 20 positioniert werden. Die Befestigungsanordnung 20 ist in dem dargestellten Falle auf dem Kopf 22 des Spants 18 mittels einer Klebschicht 24 aufgeklebt, so dass zum Befestigen der Befestigungsanordnung 20 an der Flugzeugstruktur keine Bohrungen oder dergleichen notwendig sind.

Die Befestigungsanordnung 20 besteht bevorzugt aus zwei Komponenten, nämlich einer ersten Komponente 26 und einer zweiten Komponente 28. Die zweite Komponente 28 ist am Kopf 22 des Spants 18 befestigt, während die erste Komponente 26 an der zweiten Komponente 28 beim Montieren des erfindungsgemäßen Isolationsaufbaus befestigt wird. Dazu ist der erfindungsgemäße Isolationsaufbau 16 derart eingerichtet, die erste Komponente 26 aufzunehmen, so dass der Isolationsaufbau 16 beispielsweise geeignete Öffnungen 30 aufweist, in die längliche Bereiche 32 der ersten Komponente 26 eingeführt werden können.

In der gezeigten Darstellung weist die erste Komponente 26 eine verbreiterte Aufnahme 34 für die Schwerschicht 36 auf, so dass der Abstand zwischen der Schwerschicht 36 und der Flugzeugaußenhaut 14 weiter gesteigert werden kann. Grundsätzlich wäre es sinnvoll, dabei die in Fig. 2 nicht dargestellte Absorptionsschicht beispielsweise rumpfseitig, d.h. in der Zeichnungsebene oberhalb der Schwerschicht 36, auf den Innenverkleidungselementen zu befestigen, wo sie auch als Sekundärisolierung für die Kabine fungieren könnten.

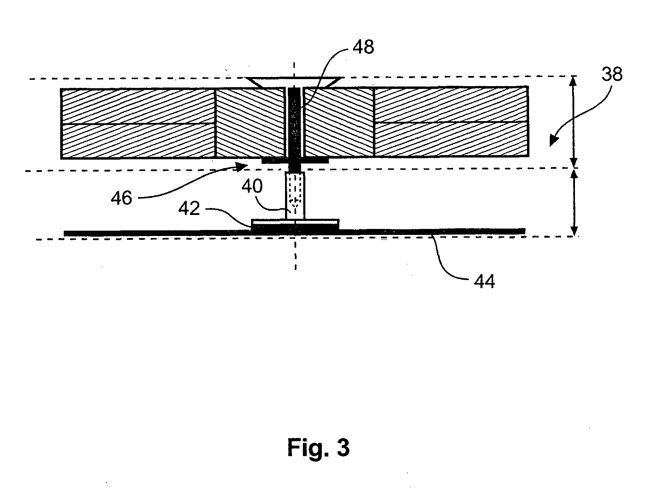

Für den Fall, dass das mit dem erfindungsgemäßen Isolationsaufbau auszurüstende Luftfahrzeug eine Struktur aus einem faserverstärkten Kunststoff - beispielsweise CFK - aufweist, kann eine Befestigung des erfindungsgemäßen Isolationsaufbaus 38 wie in Figur 3 realisiert werden. Hier ist die zweite Komponente 40 über eine Klebeschicht 42 direkt auf die Rumpfaußenhaut 44 aufgeklebt. Alternativ dazu kann die zweite Komponente 40 der Befestigungsanordnung 46 auch in die Struktur bzw. in die Rumpfaußenhaut 44 einlaminiert sein. Dies könnte durch entsprechende Integration der zweiten Komponente 40 während des Rumpflierstellvorgangs geschehen. Dadurch entfällt zwar die Flexibilität hinsichtlich nachträglicher Änderungen, jedoch kann ein hoher Vorfertigungsgrad und eine möglichst sichere Befestigung der zweiten Komponenten 40 an der Rumpfaußenhaut 44 realisiert werden. Korrespondierend zu den zweiten Komponenten 40 werden erste Komponenten 48 in dem erfindungsgemäßen Isolationsaufbau 38 integriert, mit sämtlichen Ausgestaltungen wie bereits zuvor genannt.

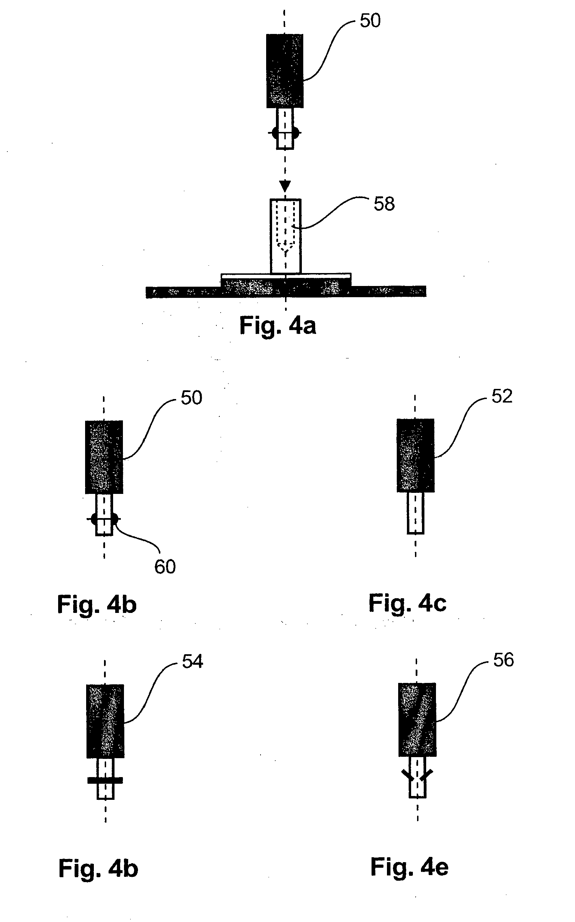

In den Figuren 4a-4e werden verschiedene Ausgestaltungen von ersten Komponenten 50 bis 56 gezeigt, die dazu dienen, möglichst einfach in zweite Komponenten 58 eingebracht und dort befestigt zu werden. So zeigt beispielsweise Figur 4B eine erste Komponente 50 mit Rastkugeln 60, die in entsprechende Vertiefungen in der zweiten Komponente 58 einrasten können. Die übrigen gezeigten Beispiele 52 bis 56 umfassen weitere Klemm- bzw. Rastverbindungen.

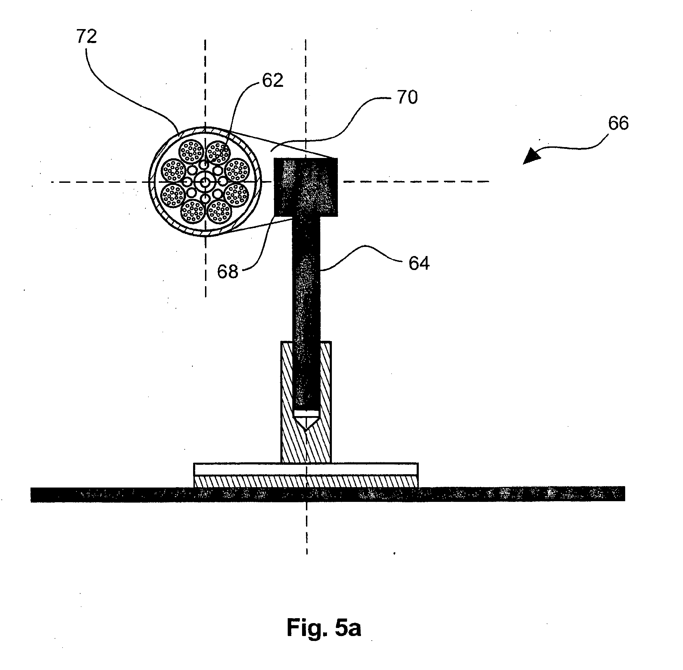

In Figuren 5a-5c werden Möglichkeiten aufgezeigt, wie weitere Objekte an den ersten Komponenten der Befestigungsanordnungen gehaltert werden können. Figur 5a zeigt beispielsweise ein Leitungsbündel 62, welches an eine erste Komponente 64 einer Befestigungsanordnung 66 gehaltert ist. Dadurch ist eine Aufnahme 68 an der ersten Komponente integriert, an die sich beispielsweise eine Art Rahmen oder Winkel 70 befestigen lässt, die wiederum einen Kabelkanal 72 oder dergleichen haltert.

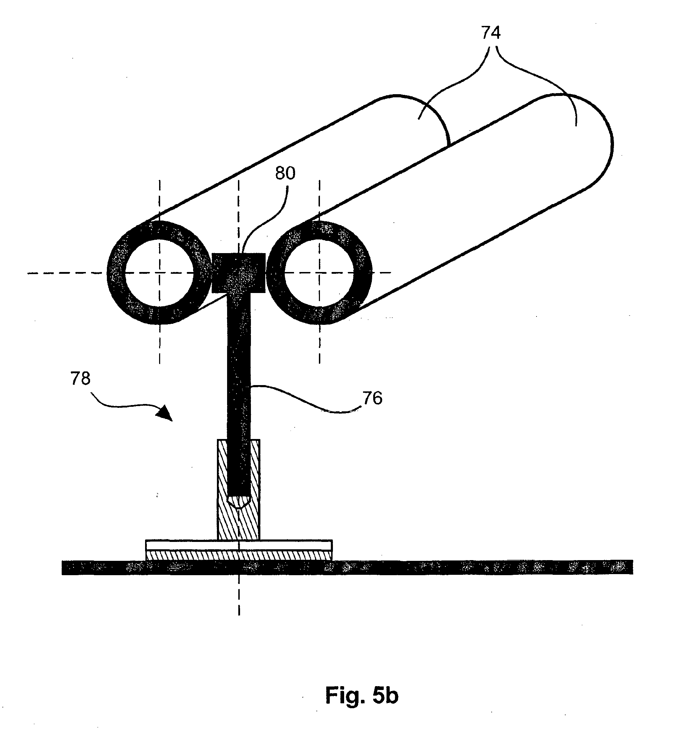

In Figur 5b wird ein ähnliches Beispiel zum Haltern von Sauerstoffleitungen 74 vorgestellt, bei dem die erste Komponente 76 der Befestigungsanordnung 78 entsprechend dazu eingerichtet ist, an einer Aufnahme 80 eine besonders sichere Halterung von Sauerstoffleitungen 74 zu ermöglichen.

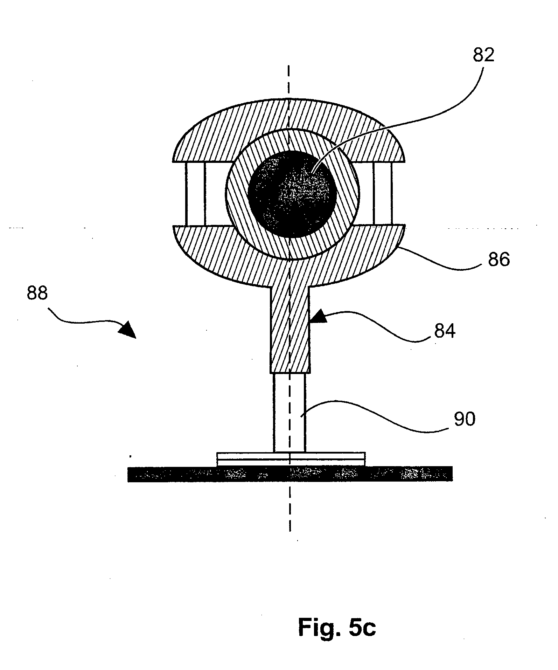

Schließlich wird in Figur 5c gezeigt, dass auch relativ dicke Fluidleitungen - wie hier beispielsweise eine Luftleitung 82 für eine Klimatisierungseinrichtung - mittels einer an der ersten Komponente 84 angeordneten Klemmeinrichtung 86 gehaltert werden kann. Entsprechend dieser aufzunehmenden zusätzlichen Last muss die Befestigungsanordnung 88 entsprechend ausgelegt werden, so dass ein Abbrechen der zweiten Komponente 90, besonders bei einlaminierter zweiter Komponente 90 ausgeschlossen werden kann.

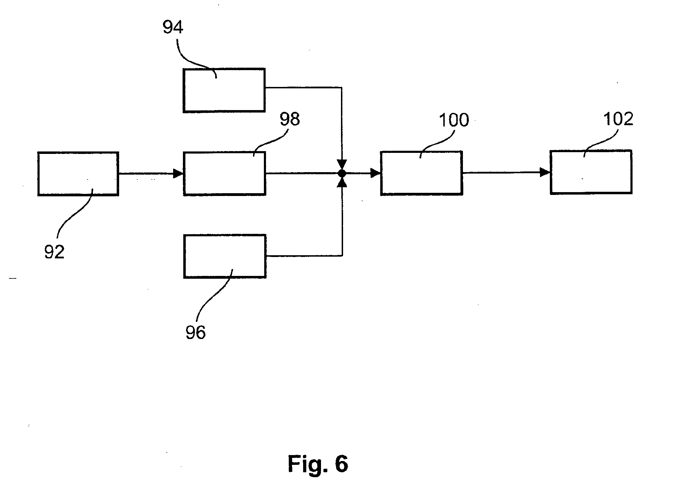

In Fig. 6 wird schließlich das erfindungsgemäße Herstellverfahren für einen erfindungsgemäßen Isolationsaufbau gezeigt, das mit den Verfahrensschritten Bereitstellen (92) einer Schwerschicht und Bereitstellen (96) einer Absorberschicht beginnt. Optional kann auch das Bereitstellen (94) einer Isolationsschicht erfolgen. Die Schwerschicht wird anschließend, vorher oder gleichzeitig dazu perforiert (98), wobei der Lochflächenanteil der Perforation gemäß den erfindungswesentlichen Merkmalen ausgelegt ist. Schließlich wird in mindestens eine der Schichten eine oder mehrere erste Komponenten der Befestigungsanordnung eingebracht (100) und anschließend in den korrespondierend angeordneten zweiten Komponenten befestigt (102).

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHEN

- 2: Isolationsaufbau
- 4: Isolationsschicht
- 6: Absorptionsschicht
- 8: Schwerschicht
- 10: Löcher
- 12: Stringer
- 14: Außenhaut
- 16: Isolationsaufbau
- 18: Spant
- 20: Befestigungsanordnung
- 22: Kopf eines Spants
- 24: Klebschicht
- 26: erste Komponente der Befestigungsanordnung
- 28: zweite Komponente der Befestigungsanordnung
- 30: Öffnung
- 32: längliche Bereiche der ersten Komponente
- 34: Aufnahme für Schwerschicht
- 36: Schwerschicht
- 38: Isolationsaufbau
- 40: zweite Komponente
- 42: Klebschicht
- 44: Rumpfaußenhaut
- 46: Befestigungsanordnung
- 48: erste Komponente der Befestigungsanordnung
- 50: erste Komponente der Befestigungsanordnung
- 52: erste Komponente der Befestigungsanordnung
- 54: erste Komponente der Befestigungsanordnung
- 56: erste Komponente der Befestigungsanordnung
- 58: zweite Komponente der Befestigungsanordnung
- 60: Rastkugel
- 62: Leitungsbündel
- 64: erste Komponente der Befestigungsanordnung
- 66: Befestigungsanordnung
- 68: Aufnahme
- 70: Winkel
- 72: Kabelkanal
- 74: Sauerstoffleitungen
- 76: erste Komponente der Befestigungsanordnung
- 78: Befestigungsanordnung
- 80: Aufnahme
- 82: Luftleitung
- 84: erste Komponente der Befestigungsanordnung
- 86: Klemmeinrichtung
- 88: Befestigungsanordnung
- 90: zweite Komponente
- 92: Bereitstellen einer Schwerschicht
- 94: Bereitstellen einer Isolationsschicht
- 96: Bereitstellen einer Absorptionsschicht
- 98: Perforieren der Schwerschicht
- 100: Einbringen erster Komponenten
- 102: Zusammenführen erster Komponenten mit zweiten Komponenten

## Patentansprüche

1. Isolationsaufbau (2, 16, 38) zum thermischen und akustischen Isolieren eines Luftfahrzeugs, aufweisend mindestens eine Schwerschicht (8, 36) und eine zusätzliche Absorptionsschicht (6)
**dadurch gekennzeichnet, dass**
die Schwerschicht (8, 36) zumindest bereichsweise perforiert ist und der Lochflächenanteil der Schwerschicht (8, 36) derart angepasst ist, dass die Schwerschicht (8, 36) für Frequenzen unterhalb einer Doppelwandfrequenz des Isolationsaufbaus im Wesentlichen schalltransparent ist.

2. Isolationsaufbau (2, 16, 38) nach Anspruch 1,
**dadurch gekennzeichnet, dass** die Absorptionsschicht (6) aus einem porösen Material besteht.

3. Isolationsaufbau (2, 16, 38) nach Anspruch 1 oder 2,
**dadurch gekennzeichnet, dass** die Absorptionsschicht (6) eine Dichte zwischen 3,5 kg/m³ und 25 kg/m³ aufweist.

4. Isolationsaufbau (2, 16, 38) nach einem der vorhergehenden Ansprüche,
**dadurch gekennzeichnet, dass** die Absorptionsschicht (6) eine Dicke zwischen 5 mm und 55 mm aufweist.

5. Isolationsaufbau (2, 16, 38) nach einem der vorhergehenden Ansprüche,
**dadurch gekennzeichnet, dass** die Schwerschicht (8, 36) ein Flächengewicht zwischen 0,5 kg/m² und 4 kg/m² aufweist.

6. Isolationsaufbau (2, 16, 38) nach einem der vorhergehenden Ansprüche,
**dadurch gekennzeichnet, dass** der Isolationsaufbau (2, 16, 38) dazu eingerichtet ist, eine erste Komponente einer Befestigungsanordnung aufzunehmen, die mit einer zweiten luftfahrzeugstrukturfest angeordneten Komponente der Befestigungsanordnung zum Eingehen einer Verbindung korrespondiert.

7. Isolationsaufbau (2, 16, 38) nach Anspruch 6,
**dadurch gekennzeichnet, dass** die zweite Komponente der Befestigungsanordnung rumpfinnenseitig an der Außenhaut des Luftfahrzeugs angeordnet ist.

8. Isolationsaufbau (2, 16, 38) nach Anspruch 6,
**dadurch gekennzeichnet, dass** die zweite Komponente der Befestigungsanordnung rumpfinnenseitig an oder auf einem Strukturversteifungsbauteil angeordnet ist.

9. Isolationsaufbau (2, 16, 38) nach einem der Ansprüche 6-8,
**dadurch gekennzeichnet, dass** die zweite Komponente der Befestigungsanordnung luftfahrzeugstrukturfest geklebt oder einlaminiert wird.

10. Isolationsaufbau (2, 16, 38) nach einem der Ansprüche 6-9,
**dadurch gekennzeichnet, dass** die erste Komponente und die zweite Komponente dazu eingerichtet sind, eine form- oder kraftschlüssige Verbindung einzugehen.

11. Isolationsaufbau (2, 16, 38) nach einem der Ansprüche 6-10,
**dadurch gekennzeichnet, dass** die erste Komponente ferner dazu eingerichtet ist, Gegenstände, Geräte, Leitungen oder dergleichen zu haltern.

12. Isolationsaufbau (2, 16, 38) nach einem der vorhergehenden Ansprüche, ferner aufweisend eine Isolationsschicht (4).

13. Verfahren zum Herstellen eines Isolationsaufbaus (2, 16, 38) aufweisend mindestens eine Schwerschicht (8, 36),
**gekennzeichnet durch** die Schritte:
- Bereitstellen (96) einer Absorptionsschicht;
- Bereitstellen (92) einer Schwerschicht;
- Perforieren (98) der Schwerschicht, wobei der Lochflächenanteil der Schwerschicht derart angepasst wird, dass die Schwerschicht für Frequenzen unterhalb einer Doppelwandfrequenz des Isolationsaufbaus im Wesentlichen schalltransparent ist;
- Einbringen (100) mindestens einer ersten Komponente der Befestigungsanordnung in mindestens eines der Elemente
- Absorptionsschicht und
- Schwerschicht,
- Zusammenführen (102) der ersten Komponenten der Befestigungsanordnungen mit zweiten strukturfest angeordneten Komponenten der Befestigungsanordnung.

14. Verwendung eines Isolationsaufbaus nach einem der Ansprüche 1-12 in einem Luftfahrzeug.

15. Flugzeug mit mindestens einem Isolationsaufbau nach einem der Ansprüche 1-12.

## Claims

1. An insulation structure (2, 16, 38) for thermally and acoustically insulating an aircraft, comprising at least one heavy layer (8, 36) and an additional absorption layer (6),
**characterized in that** the heavy layer (8, 36) is perforated at least in certain areas and **in that** the perforated area ratio of the heavy layer (8, 36) is adapted in such a way that the heavy layer (8, 36) is essentially transparent to sound for frequencies below a double-wall frequency of the insulation structure.

2. The insulation structure (2, 16, 38) of claim 1,
**characterized in that** the absorption layer (6) consists of a porous material.

3. The insulation structure (2, 16, 38) of claim 1 or 2,
**characterized in that** the absorption layer (6) has a density between 3.5 kg/m³ and 25 kg/m³.

4. The insulation structure (2, 16, 38) of one of the preceding claims,
**characterized in that** the absorption layer (6) has a thickness between the 5 mm and 55 mm.

5. The insulation structure (2, 16, 38) of one of the preceding claims,
**characterized in that** the heavy layer (8, 36) has a weight per unit area between 0.5 kg/m² and 4 kg/m².

6. The insulation structure (2, 16, 38) of one of the preceding claims,
**characterized in that** the insulation structure (2, 16, 38) is designed for accommodating a first component of a mounting arrangement that corresponds to a second component of the mounting arrangement rigidly fixed on the aircraft structure in order to produce a connection.

7. The insulation structure (2, 16, 38) of claim 6,
**characterized in that** the second component of the mounting arrangement is arranged on the outer skin of the aircraft on the inner side of the fuselage.

8. The insulation structure (2, 16, 38) of claim 6,
**characterized in that** the second component of the mounting arrangement is arranged on or on top of a structural reinforcing component on the inner side of the fuselage.

9. The insulation structure (2, 16, 38) of one of claims 6-8,
**characterized in that** the second component of the mounting arrangement is rigidly bonded onto or laminated into the aircraft structure.

10. The insulation structure (2, 16, 38) of one of claims 6-9,
**characterized in that** the first component and the second component are designed for producing a positive or non-positive connection.

11. The insulation structure (2, 16, 38) of one of claims 6-10,
**characterized in that** the first component is furthermore designed for mounting objects, devices, lines or the like.

12. The insulation structure (2, 16, 38) of one of the preceding claims, furthermore comprising an insulation layer (4).

13. A method for manufacturing an insulation structure (2, 16, 38) comprising at least one heavy layer (8, 36),
**characterized in** the steps:
- providing (96) an absorption layer;
- providing (92) a heavy layer;
- perforating (98) the heavy layer, wherein the perforated area ratio of the heavy layer is adapted in such a way that the heavy layer is essentially transparent to sound for frequencies below a double-wall frequency of the insulation structure;
- integrating (100) at least one first component of the mounting arrangement into at least one of the elements
- absorption layer and
- heavy layer,
- joining (102) the first components of the mounting arrangement with second components of the mounting arrangement that are rigidly arranged on the structure.

14. The use of an insulation structure of one of claims 1-12 in an aircraft.

15. An aircraft with at least one insulation structure of one of claims 1-12.

## Revendications

1. Structure d'isolation (2, 16, 38) destinée à l'isolation thermique et acoustique d'un aéronef, présentant au moins une couche lourde (8, 36) et une couche d'absorption supplémentaire (6),
**caractérisée en ce que** la couche lourde (8, 36) est perforée au moins par endroits et la proportion de surface perforée de la couche lourde (8, 36) est adaptée de telle sorte que la couche lourde (8, 36) soit sensiblement acoustiquement transparente pour des fréquences inférieures à une fréquence de paroi double de la structure d'isolation.

2. Structure d'isolation (2, 16, 38) selon la revendication 1,
**caractérisée en ce que** la couche d'absorption (6) est constituée d'un matériau poreux.

3. Structure d'isolation (2, 16, 38) selon la revendication 1 ou 2,
**caractérisée en ce que** la couche d'absorption (6) présente une densité comprise entre 3,5 kg/m³ et 25 kg/m³.

4. Structure d'isolation (2, 16, 38) selon une des revendications précédentes,
**caractérisée en ce que** la couche d'absorption (6) présente une épaisseur entre 5 mm et 55 mm.

5. Structure d'isolation (2, 16, 38) selon une des revendications précédentes,
**caractérisée en ce que** la couche lourde (8, 36) présente un poids superficiel compris entre 0,5 kg/m² et 4 kg/m².

6. Structure d'isolation (2, 16, 38) selon une des revendications précédentes,
**caractérisée en ce que** la structure d'isolation (2, 16, 38) est agencée de manière à recevoir un premier composant d'un agencement de fixation qui correspond à un second composant de l'agencement de fixation fixé à la structure d'aéronef afin d'obtenir une liaison.

7. Structure d'isolation (2, 16, 38) selon la revendication 6,
**caractérisée en ce que** le second composant de l'agencement de fixation côté intérieur de la coque est disposé contre l'enveloppe extérieure de l'aéronef.

8. Structure d'isolation (2, 16, 38) selon la revendication 6,
**caractérisée en ce que** le second composant de l'agencement de fixation côté intérieur de la coque est disposé contre ou sur un élément de renfort de la structure.

9. Structure d'isolation (2, 16, 38) selon une des revendications 6 à 8,
**caractérisée en ce que** le second composant de l'agencement de fixation est collé ou laminé de manière fixée à la structure d'aéronef.

10. Structure d'isolation (2, 16, 38) selon une des revendications 6 à 9,
**caractérisée en ce que** le premier composant et le second composant sont agencés de manière à obtenir une liaison par complémentarité de forme ou de force.

11. Structure d'isolation (2, 16, 38) selon une des revendications 6 à 10,
**caractérisée en ce que** le premier composant est en outre agencé de manière à maintenir des objets, des appareils, des câbles ou similaires.

12. Structure d'isolation (2, 16, 38) selon une des revendications précédentes, présentant en outre une couche d'isolation (4).

13. Procédé de fabrication d'une structure d'isolation (2, 16, 38) présentant au moins une couche lourde (8, 36),
**caractérisé par** les étapes consistant à :
- fournir (96) une couche d'absorption ;
- fournir (92) une couche lourde ;
- perforer (98) la couche lourde, la proportion de surface perforée de la couche lourde étant adaptée de telle sorte que la couche lourde soit sensiblement acoustiquement transparente pour des fréquences inférieures à une fréquence de paroi double de la structure d'isolation ;
- insérer (100) au moins un premier composant de l'agencement de fixation dans au moins l'un des éléments suivants :
• couche d'absorption et
• couche lourde ;
- joindre (102) les premiers composants des agencements de fixation et des seconds composants de l'agencement de fixation qui sont fixés à la structure.

14. Utilisation d'une structure d'isolation selon une des revendications 1 à 12 dans un aéronef.

15. Avion comprenant au moins une structure d'isolation selon une des revendications 1 à 12.
